(19) **Europäisches Patentamt**
**European Patent Office**
**Office européen des brevets**

(11) **EP 3 051 922 B1**

(12) **EUROPEAN PATENT SPECIFICATION**

(45) Date of publication and mention
of the grant of the patent:
**29.05.2019 Bulletin 2019/22**

(51) Int Cl.:
*H04W 88/10* *(2009.01)*     *H04W 88/12* *(2009.01)*
*H04W 84/10* *(2009.01)*     *H04W 84/04* *(2009.01)*

(21) Application number: **16000154.1**

(22) Date of filing: **22.01.2016**

(54) **DEVICE FOR CONNECTING AND OFFLOADING OF DATA TRAFFIC FROM CELLULAR NETWORKS TO WIRELESS NETWORKS**

VORRICHTUNG ZUM VERBINDEN UND ENTLADEN VON DATENVERKEHR VON ZELLULAREN NETZWERKEN AN DRAHTLOSE NETZWERKE

DISPOSITIF DE CONNEXION ET DE DÉLESTAGE DE CIRCULATION DE DONNÉES DANS DES RÉSEAUX CELLULAIRES VERS DES RÉSEAUX SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2015 IT AR20150002**

(43) Date of publication of application:
**03.08.2016 Bulletin 2016/31**

(73) Proprietor: **Sintau S.r.l.**
**67051 Avezzano (AQ) (IT)**

(72) Inventor: **Centoletti, Pietro**
**67051 Avezzano (AQ) (IT)**

(74) Representative: **Olivieri, Antonella**
**Fabbriciani & Olivieri S.r.l.**
**Piazza Guido Monaco, 11**
**52100 Arezzo (IT)**

(56) References cited:
**US-A1- 2001 046 215     US-A1- 2014 051 372**
**US-A1- 2014 362 807**

• **LIU XINGYU ET AL: "An Analytic Hierarchy Process Algorithm for Cloud Based Wi-Fi Offloading", 2014 IEEE INTERNATIONAL CONFERENCE ON COMPUTER AND INFORMATION TECHNOLOGY, IEEE, 11 September 2014 (2014-09-11), pages 234-239, XP032702851, DOI: 10.1109/CIT.2014.46**

Printed by Jouve, 75001 PARIS (FR)

## Description

## Technical Field

The present invention relates to a device for connecting and offloading of data traffic from cellular networks to wireless networks.

Data traffic download from cellular networks to wireless networks is also known as "Wi-Fi data offload" or "data offload".

## Background Art

Among wireless networks, technology known with the trade name of Wi-Fi is one of the most used, especially in areas with high access density (hypermarket, shopping centres, stations, ports, airports, etc.), where users stay for a long time and use the majority of the bandwidth. Compared to other small cell technologies (e.g. femtocells), Wi-Fi is very attractive for operators due to the favourable cost-efficiency ratio, as well as to the possibility of providing a broad service assembly which allows the installation of a large number of devices, a wide availability of ancillaries supporting it and a global availability of unlicensed bandwidth.

In recent years, the very rapid technological development and the availability of data traffic plans having accessible costs to the majority of the population have favoured the spread of virtual and social network community (the so-called "social networks"), with the subsequent use of a very demanding connections in terms of bandwidth occupation and power consumptions for the access to contents shared and recommended by the community.

According to forecasts, in the near future, both the development of new applications and, consequently, the volume of data being exchanged by users will grow, resulting in the risk of exceeding the network capacity. In addition, cellular networks based on IP protocol (acronym for Internet protocol), including cellular networks based on the fourth generation 4G or LTE (acronym for "Long Term Evolution") standard and on the WiMax (acronym for Worldwide Interoperability for Microwave Access) standard provide significantly higher transmission capacities compared to the previous cellular network generation.

However, the spectrum allocated to cellular networks remains poor, limiting *de facto* the fourth generation and the future generation cellular network capability to accommodate the increasing demand for mobile traffic from mobile devices such as smartphones, the so-called "tablet" devices and the like.

For this reason, mobile network service providers feel more and more the need to define a strategy in order to successfully manage requests for mobile traffic so that they may continue to provide mobile devices users with high-quality experiences, attract new customers and retain the satisfied ones.

Another concern is represented by the fact that the number of new users utilizing data applications and video with high intensity rate of bandwidth use is increasing, despite a limited spectrum availability.

In addition, the increase in the amount of videos, audio tracks and photos available on the Internet is changing the way users seek and access the contents. For example, widespread data exchange with other users through social networks, social bookmark services and websites is more and more frequent. This means that contents are downloaded without limits by a number of users proportional to the content popularity.

Such behaviour determines bottlenecks especially in densely populated urban areas during peak hours with the possibility that network traffic blocks will occur more and more frequently even if operators will update their facilities to support 3G and 4G speeds.

Another concern is related to the fact that this exponential growth of data traffic use on mobile networks increasingly causes concerns of congestion network and cellular network capacity. Even if mobile phone operators try to meet the increasing demand, they are forced, however, to monitor operating costs and minimize capital exposures. This increasing demand continues to exceed cellular network capacity to satisfy the demand even with the installation of third generation (3G HSPA) and fourth generation (4G LTE) broadband wireless access networks, and microwave access networks (WiMAX).

In current state of the art, operators seek to solve this concern by downloading part of the traffic from their 3G and 4G access networks, with the aim of leaving unaltered use experience of the user, service quality and applied tariffs. The realization of an appropriate infrastructure collides with the operators' need to maintain contained financial commitment required for realization and operating costs. US2001/046215(A1) relates to systems and methods that allow communication in the same building (even in a broad sense of multiple buildings constituting a single complex, such as a campus) on various wired and wireless technologies. In particular, a method of communication in which a common cell is formed between public wireless communication and the local one, said cell being connected to a wired public network, and where the local cellular communication functions are guaranteed to terminals (smartphones, tablets, PCs...) registered and unsecured to unregistered terminals.

It discloses a device for connecting and downloading of data traffic from cellular networks to wireless networks, comprising:

    a first wireless interface which connects at least a home wireless network to which home users and devices may connect;
    a second wireless interface which connects at least a public wireless network to which external users and devices external to the environment served by the home wireless network may connect;
    at least one WAN connection interface connected to a WAN shared access system;
a management interface that provides management and control functions; and
a switching matrix by means of which the traffic from at least one between the first wireless interface, the home wireless interface, the second wireless interface, the public wireless network or the management interface, is suitable to be allocated and separated into physical channels and/or logic channels differentiated according to data traffic origin. Traffic being also configured in bandwidth portions bidirectionally assigned to the physical channels and/or the logic channels compared to the capacity of the connection interface to the WAN shared access system.

The publication "An Analytic Hierarchy Process Algoritm for Cloud Based Wi-Fi Offloadin" presented by Liu Xingyu and others at the 2014 IEEE International Conference on Computer Technology, describes a device performing the process of transferring data traffic from the cellular networks to wireless networks in case of congestion. US2014/362807(A1) describes a system that integrates a Wireless Access Point (AP) into a mobile operator's network and includes a Wireless Service Gateway (WSG) configured to communicate with one or more APs with the mobile operator's network and to provide a connection between the AP and the mobile operator network.

It discloses integrating wireless service providers' core networks with WI-Fi radios using a Wireless Service Gateway (WSG), allowing for data transmission of wireless devices through Wi-Fi instead of through cellular antennae, thus increasing bandwith and data transmission rates.

A problem related to the above documents is to cover the maximum number of clients, improving spectrum usage of cellular networks, in the most economically advantageous way, avoiding the use of WSG.

## Summary of Invention

The task that the invention intends to fulfil is to eliminate the above-mentioned drawbacks in known types of connection and data traffic download devices from cellular networks to wireless networks, thus allowing to achieve a device for connecting and offloading data traffic that is cheaper and easier to realize and to improve spectrum usage of cellular networks.

Within the above task, an object that the invention intends to fulfil is to realize a device for connecting and offloading of data traffic from cellular networks to wireless networks allowing the use of the alternative network spectrum in order to avoid network traffic block.

A further object that the invention intends to fulfil is to improve the user's possibility to automatically connect and download data without excessive and exorbitant costs.

Another object of the connection device according to the invention is to allow the realization of a connection platform to mobile networks that is very wide and can accommodate the increasingly data traffic with economic conditions supportable by users and telephone operators. Last but not least, another object of the invention is to realize a device for connecting and offloading of data traffic from cellular networks to wireless networks, with readily commercially available means and using commonly used materials, so that the device is economically competitive.

This task, as well as these and other objects, which will become apparent hereafter, are achieved by a device for connecting and offloading data traffic from cellular networks to wireless networks, according to the appended claim 1.

## Brief description of the drawings

Further invention features and advantages will become clearer from the description of a preferred but not exclusive embodiment of the device for connecting and offloading for data traffic from cellular networks to wireless networks, illustrated by way of example, but not limited thereto, with the aid of the attached drawings wherein:

figure 1 schematically illustrates a block diagram of a first embodiment of the device connecting and offloading for data traffic from cellular networks to wireless networks which serves, through two wireless interfaces WI, a home wireless network HWN and a public wireless network PWN, a wired local network LN and a management interface MGI, all sharing access to the Internet or to the area networks through a WAN connection (WAI);
figure 2 schematically illustrates the access network architecture in which there are four devices, according to the invention, connected to four distinct Internet connections;
figure 3 schematically illustrates a block diagram of one possible device implementation, according to the invention, which serves two wireless networks Wi-Fi IEEE802.11g\n HWN and PWN, a wired local network LN, a management interface MGI, and a smart counter wireless network SWN, whereby all these interfaces share the Internet or the area network access through a WAN connection;
figure 4 schematically illustrates the access network architecture in which there are three devices, according to the invention, suitable to be connected to three distinct Internet connections and which serve home HWN and public wireless networks PWN simultaneously to a smart counter wireless network SWN;
Figure 5 illustrates a block diagram of one possible system implementation which supports two Wi-Fi wireless networks HWN and PWN, a local network LN and a smart counter wireless network SWN implemented with an external WM-BUS wireless module connected to the switching matrix SM;
figure 6 represents the WAN connection physical channel divided into three logic channels, differentiated so that the switching matrix SM addresses the traffic coming from home HWN, public PWN and smart counter wireless network SWN to three distinct logic channels.

## Ways of carrying out the invention

With reference to mentioned figures, a key feature of the device for connecting and offloading of data traffic from cellular networks to wireless networks, according to the invention, which is globally identified with reference 1, 101 and 201, is given by the fact of comprising:

- a first wireless interface WI connecting at least one home wireless network HWN (homes, offices, restaurants, etc.) to which home users HU and home devices may connect;
- a second wireless interface WI connecting at least one public wireless network PWN to which external users EU and devices external to the environment served by the home network HWN may connect;
- at least one WAN interface, that is Wide Area Network, connected to a WAN shared access system, i.e. to the Internet or to area networks for both home users HU and external users EU, with a shared, differentiated, protected or WAN connection configured access system;
- a management interface MGI which provides all the management and control functions;
- a switching matrix SM for separating and allocating the traffic from interfaces (first and second wireless interface WI and management interface MGI) different from that of home wireless HWN and from that of public wireless PWN, by means of said wireless interfaces (WI), into at least two distinct physical channels and/or logic channels differentiated according to data traffic origin. Such traffic is further configured in bandwidth portions bidirectionally assigned to physical and/or logic channels, known *per se,* compared to the capacity of the connection interface (WL) to the WAN shared access system.

Home users HU and external users EU mean any kind of smart device used for communication, such as, for example, a smartphone, a portable data processor, such as a laptop or a tablet or similar equipment, respectively served by home HWN and public wireless network PWN. Advantageously, the device (1, 101 and 201) has at least one local network LN of any type, which connects in wired mode (thus it can be said that it is a "wired network LN") home users HU and home devices having the interface requested by the local network LN. Advantageously, data traffic from at least one between the first and the second wireless interface WI is separated, differentiated, protected and configured upstream of the WAN connection interface (WAI), e.g., in input to this interface. In this way, home user (HU) and external user (EU) data do not directly interfere with each other in the system.

Thus, for example, traffic from wireless interfaces WI (HWN and PWN) is separated and configured upstream of the WAN interface (WAI) to connection (WL) to WAN area network and/or the Internet, in order to divide home user HU and external users EU data, so that, by means of bandwidth allocation, at least a WL connection bandwidth predetermined portion is made available to users served by home wireless network HWN, as well as another bandwidth portion is made available to users served by public wireless network PWN. Preferably, it is provided to make available a first WL connection bandwidth portion to home users HU and a second differentiated bandwidth portion to external users EU.

Furthermore, with traffic configuration obtained by means of bandwidth allocation, known *per se,* a WAN connection bandwidth predetermined portion is made available. Thus, in this way, various WAN connection (WAI) percentages may be allocated to various wireless and wired networks afferent to the system.

It is provided that these bandwidth allocation means manage dynamically the bandwidth portion to be made available to home HU and external users EU. Thus, the above-described separation and arrangement described above will be managed in static or dynamic way according to different algorithms and/or configurations.

Wireless and wired interfaces may be, obviously, more than one and may be realized in a virtual and/or physical way. For example, home wireless network HWN interfaces may be a number equal to N, public wireless network PWN interfaces may be a number M, and wired interfaces may be K, where N, M and K are integers.

Normally, such N and M integers are higher than or equal to 1 since wireless networks are always present, whereas regarding the K wired networks, since they could not be present, the K integer will also be 0. Thus, as there is no combination constraint for N, M and K, generally they will be integers higher than or equal to zero.

Furthermore, at least one between the first and second wireless interface WI is advantageously virtual multiple, implemented on the same physical interface.

In the embodiment example described herein, both the first and the second wireless interface WI are virtual multiples but the case in which the wireless physical interface is unique and virtual wireless interfaces are implemented on it for both home network HWN and public network PWN, cannot be excluded.

Such interfaces are virtual multiples implemented on the same physical interface, in any number and type combination. This remains valid on both public wireless network PWN and home wireless network HWN. Preferably, all or some wireless interfaces are of IEEE 802.11g, IEEE 802.11h, IEEE 802.11n, IEEE 802.11ac type.

Preferably, all or some wireless interfaces are of WM-BUS at 169 Mhz or 868 Mhz type.

Preferably, all or some wireless interfaces are of ZigBee type.

Preferably, all or some wireless interfaces are of LORA type.

Preferably, all or some wired interfaces are of IEEE 802.3 type.

Preferably, all or some wired interfaces are of CAN BUS type.

Preferably, all or some wired interfaces are of RS485 type.

Preferably, the WAN connection interface (WAI) is of ADSL2/2+ type and the bandwidth sharing on the connection is implemented by traffic classification management functionalities, QoS management and differentiated traffic flows mapping on different PVC.

Preferably, the WAN connection interface (WAI) is of VDSL2 type and the bandwidth sharing on the connection is implemented by traffic classification management functionalities, QoS management and differentiated traffic flows mapping on different PVC.

Preferably, the WAN connection interface (WAI) is of RADSL type.

Preferably, the WAN connection interface (WAI) is of HDSLx type (with x = 1, 2, 4, 8).

Preferably, the WAN connection interface (WAI) is of FTTx type (with x = H, B, C, N).

Preferably, the WAN connection interface (WAI) is of HyperLAN wireless type.

Advantageously, the WAN interface (WAI) is implemented on more than one WAN physical connections of ADSL2/2+ and/or VDSL2 and/or RADSL and/or HDSL and/or FTTx wireless and/or HyperLAN wireless type, in any number and type combination thereof. Advantageously, the WAN connection interface (WAI) is shared between two or more logic channels, each of which is connected to the various wireless and wired networks in any number and type combination, through the switching matrix SM.

Advantageously, the matrix SM is a data traffic connection and channelization matrix between home wireless network HWN and/or public wireless network PWN and/or WAN connection interface (WAI). Data traffic channelization is interlocked to bandwidth allocation means.

Thus, it is provided that the switching matrix SM is implemented as a piece of equipment or a set of instrumentations allowing connection between local network or networks, home wireless network or networks, public wireless network or networks and WAN connection or connections, and allowing separation between traffics and/or traffic protection, and/or traffic configuration by means of bandwidth allocation.

Preferably, connection interfaces to wireless networks, to wired network LN and to WAN connection are realized with an apparatus and/or modules and/or a set of apparatuses and modules, and are connected to the switching matrix SM through wired and/or wireless connections.

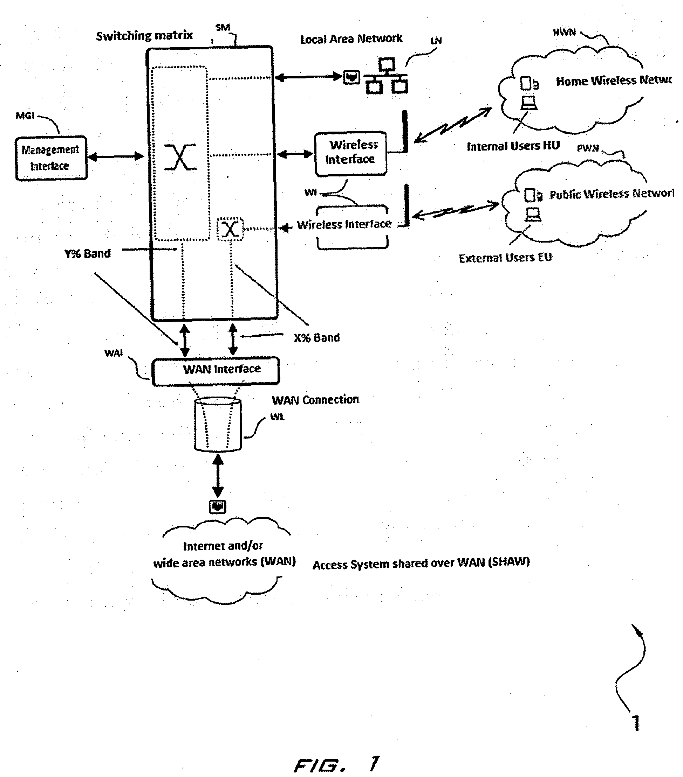

A first embodiment solution comprises two wireless networks commercially known as Wi-Fi, a first home network HWN dedicated to home users HU access and a second public network PWN for external users EU access served by two wireless interfaces WI. Such device is provided with a management interface MGI locally accessible through a terminal or through a remote management session via both a browser WEB and a terminal emulation program. The device shown in figure 1 has also a local network LN interface, which is normally an Ethernet network but is not limited to this possibility only.

The Internet or area network connection is realized via a shared access WAN interface (WAI) wherein different class users (home HU, external EU, etc.) are mapped and addressed to different and separated logic channels which are on the same physical shared channel. The WL connection may be any wired connection implementation (e.g., ADSL2/2+, VDSL2, HDSL, SHDSL, etc.) or also a wireless connection of 3G\4G or HyperLAN type. In this latter case, the application scenario provides data traffic download on a local base from congested 3G\4G cells to 3G\4G cells achieved through mesh connection among public wireless networks (PWN).

In this first configuration, wireless networks, both home HWN and public network PWN, may be served by one or more virtual or physical wireless interfaces WI. In case of virtual interfaces a same physical interface will support one or more virtual wireless interfaces. The proposed device includes any virtual and/or physical interface combination.

Preferably, allocation means of a WAN connection bandwidth configurable part are provided to home users HU.

It is also possible to configure the remaining part of the WL connection bandwidth to external users EU.

As mentioned, the allocation of these bandwidths could be also done dynamically on the basis of requests coming from external users EU and on bandwidth use and occupation by home users HU. For example, it is possible that the bandwidth can be completely allocated to external users EU when no user is connected to home network HWN and/or to wired local network LN. This is what often happens during evening hours if the home user connects from home or during mealtimes in offices and factories.

The bandwidth reserved to external users EU is X%, whereas the bandwidth reserved to home users HU is Y% (fig .1). It is clear that the limit will be given by the sum of the two X and Y bandwidth portions (X+Y=100), but theoretically all other possible combinations are allowed, and then the condition to meet is:

$$X + Y \leq 100.$$

Bandwidth dynamic allocation mechanisms may allow external users EU to have all the bandwidth allocated when internal users HU are not active. These mechanisms should include an immediate bandwidth reallocation to internal users HU as soon as they are active again, freeing the temporarily and dynamically allocated bandwidth to external users EU.

Referring to figure 1 again, the switching matrix SM is an apparatus or equipment allowing to realize local traffic separation, which could come from internal users HU connected to home wireless network HWN or from local network LN, from external traffic coming from external users connected to public wireless network PWN.

Bandwidth allocation is also implemented by the switching matrix SM based on information coming from the mobile network operator and on the Internet connection profile, which characterizes WAN connection shared access system, according to the rules set up in the profile and defined in the service agreement signed with the mobile network operator.

Home wireless network HWN is generally protected by classical protection mechanisms (WPA, WPA2, etc.) and behaves like a Wi-Fi network protected and separated from public wireless network PWN. A public wireless network PWN user, the so-called external user EU, is neither enabled nor capable to connect to home wireless network HWN without knowing authentication data and encryption keys.

The management interface MGI could be used through a local terminal or also in a remote way. It has the task of controlling all the allocation, isolation and traffic and bandwidth protection mechanisms, and configuring all the parameters inherent to these functions.

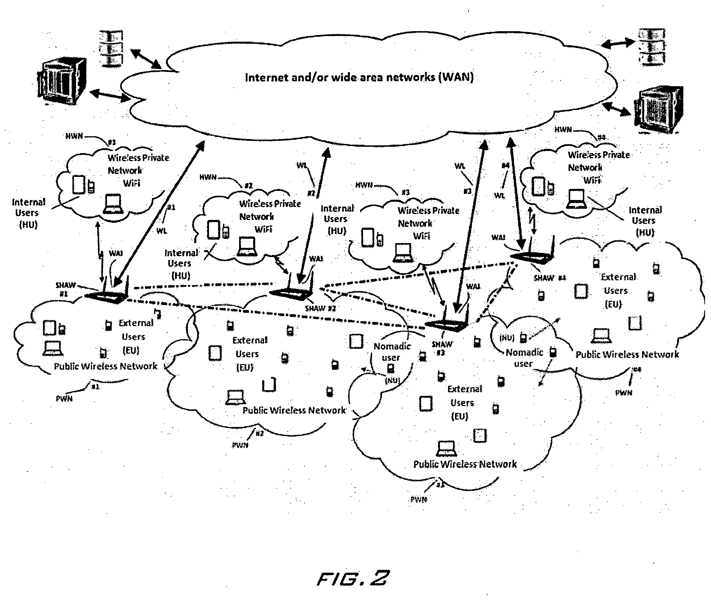

With reference to figure 2 more connection and data traffic download devices (e.g. four) from cellular networks to wireless networks of WAN connection shared access, which serve home HWN and public wireless networks PWN, may be provided.

Thus, each WAN connection shared access system allows external users EU that are present in the areas served by the shared access system itself to connect to the Internet on the basis of a WAN connection bandwidth percentage intended for this function.

As mentioned, such percentages can be different for each connection and may vary over time during the WAN connection shared access system operational life through WAN connection bandwidth dynamic allocation that can be achieved on the basis of the presence of active internal users HU at that time by means of an appropriate program, protocol or algorithm.

Advantageously, WAN interface (WAI) to WL connection to WAN area network and/or the Internet, is made available to external users EU served by public wireless networks PWN different from that or those served by the device and connected to each other through protocols suitable to implement wireless mesh networks WMN.

Advantageously, shared access SHAW devices may implement wireless mesh networks WMN in their public wireless networks PWN, thereby external users EU are allowed to share WAN connections belonging to other devices, besides that to which they are connected. That is to say that the set of such devices forms a WAN connection shared access system wherein the connection devices are connected to each other with protocols which implement wireless mesh networks WMN and wherein other connection resources to area and/or the Internet networks are made available to external users EU.

In this type of wireless connection, efficient routing protocols (also said "routing algorithms") may be implemented to find WL connections, which have greater bandwidth availability compared to others, i.e. in a way that external users EU connect to the WAI interface, which ensures a better efficiency.

Again, with reference to the described configuration in figure 2, it can be provided that public wireless networks PWN are arranged in overlapped service areas so that they can provide support for wireless mesh networks WMN.

Furthermore, it is possible to address traffic towards other similar devices when some WAN connection shared access devices were to be not available, due to lack of supply, device power down etc.

With wireless mesh network (WMN) use it is also possible to manage the so-called nomadic users (NU), whereby for nomadic user (NU) is meant the user that moves from a public wireless network PWN to an adjacent one, through an appropriate algorithm, such as a handover algorithm that allows nomadic user to remain connected during the passage from a public wireless network PWN to another with a partly overlapping coverage area.

In practice, with this system, devices implement four public access Wi-Fi wireless networks and four private access Wi-Fi wireless networks, whereby public access networks PWN serve external users EU whereas private access networks HWN serve home users HU. Public access Wi-Fi wireless networks implement a mesh topology allowing also the nomadism (or nomadicity) of external users EU (that are also called nomadic users, NU) between a network and the neighbouring one. All systems are connected to the Internet via a shared access WAN connection between public and private networks.

Wireless mesh networks WMN may be also used to implement bandwidth sharing mechanisms and load balancing between two or more WAN connections that can be reached by the user.

Another variant provides that the switching matrix SM is connected to: a home wireless network HWN, a local wired network LN, a public wireless network PWN, a smart counter wireless network SWN, a management interface MGI and the WAN connection interface.

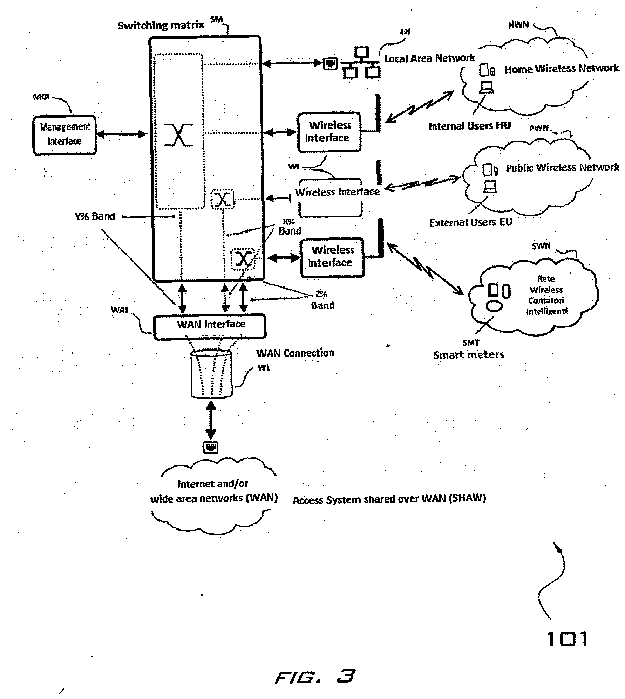

By mere way of example, in the scheme illustrated in figure 3, home HWN and public wireless networks PWN are implemented in Wi-Fi IEEE 802.11g (or IEEE 802.11n) technology, whereas smart counter wireless network (SWN) is implemented in WM-BUS at 169 Mhz (or also at 868 Mhz) technology.

In this specific case, the bandwidth allocation involves an X% of allocated bandwidth to the public wireless network PWN, a Y% of allocated bandwidth to the home wireless network HWN and a Z% of allocated bandwidth to the smart counter wireless network SWN. It is clear that the condition to meet is:

$$X + Y + Z \leq 100.$$

It is also clear that the bandwidth reserved to smart counter wireless network (SWN) could be allocated only at certain time slots, e.g. at night, when other networks are less engaged, or could be allocated on the basis of algorithms (of "best effort" type) in view of the poor traffic that such network engages.

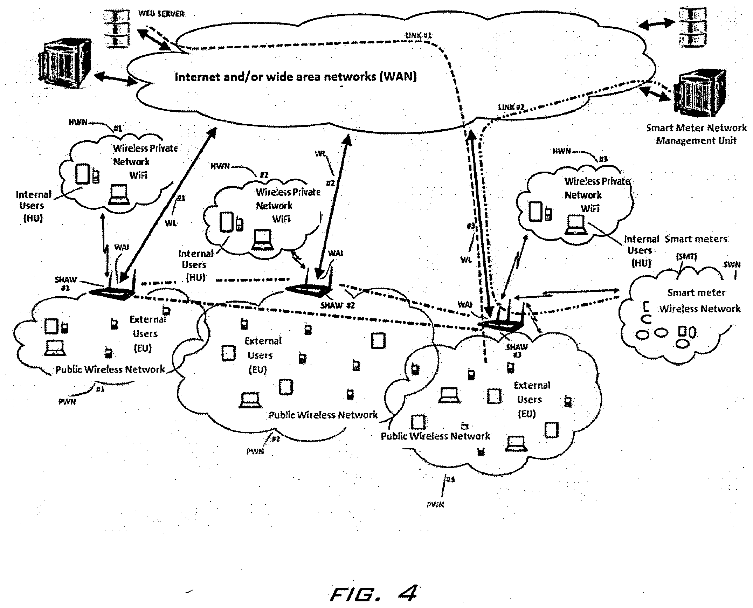

In figure 4, three connection devices according to the invention implement three public access Wi-Fi wireless networks, three home access Wi-Fi wireless networks and a smart counter wireless network. Public access networks serve external users EU, private access networks serve the so-called home users HU and smart counter network serves to monitor and query smart counters on the basis of requests from management centre SMT. Public access Wi-Fi wireless networks implement a mesh topology thereby allowing also the nomadism of external users EU (nomadic users, NU) between a network and that neighbouring. Again, all the systems are connected to the Internet via a shared access WAN connection between public, private and smart counter networks.

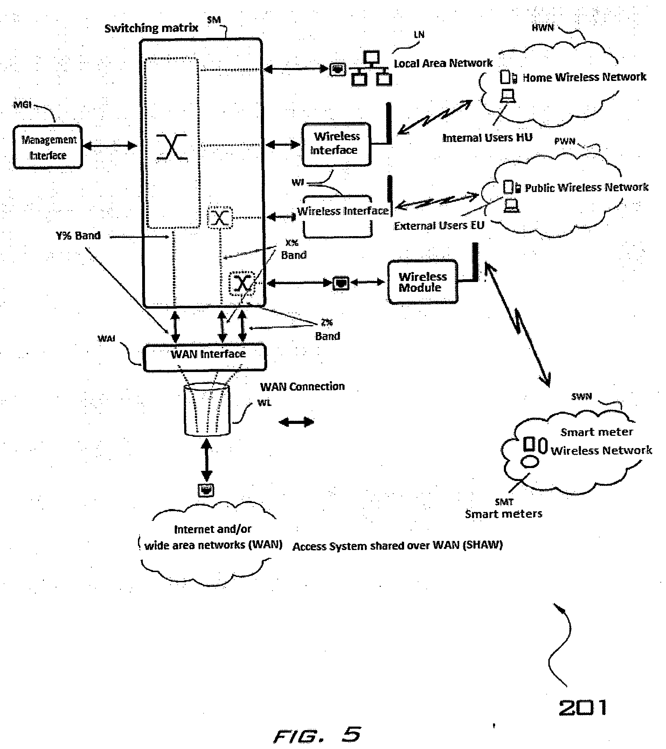

As mentioned, the three different WAN connection shared access devices serve public wireless networks (PWN) and home wireless networks (HWN) and further, one of these serves in parallel also the smart counter wireless network (SWN). In particular, connections referred to as LINK#1 and LINK#2 are highlighted: LINK#1 connection allows an external user (EU) of the public wireless network PWN#3 to connect to a web server, whereas LINK#2 connection allows smart counter network management centre to control and manage SMT smart counters via a bandwidth allocated portion on the WL#3 connection, served by WAN SHAW#3 connection shared access system. Smart counter wireless network may work with one of many possible protocols defined for the purpose, such as e.g. the WM-BUS at 169 Mhz or at 868 Mhz. It is clear that such types of wireless communication may be implemented through dedicated interfaces present in the device or with specific external interfaces connected to the system through one of the doors of switching matrix SM (fig. 5).

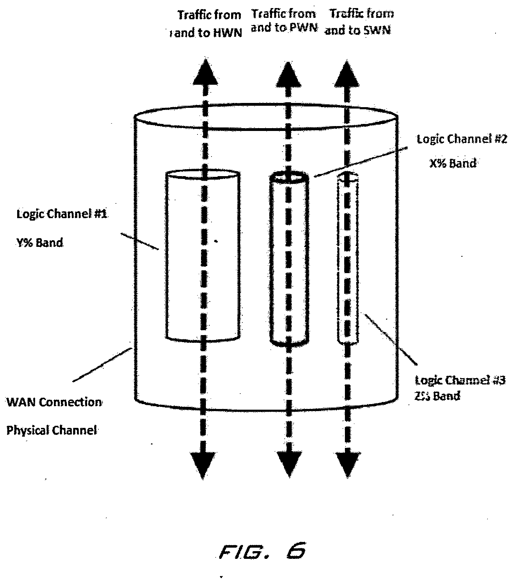

In this second hypothesis, wireless interface WI towards smart counters is implemented with an external module connected through a matrix SM wired interface and then from this towards the WL connection, a bandwidth part reserved to this traffic (Z%) having been allocated, separate and protected from the other traffic flows. Advantageously, WAN connection physical channel is divided into three logic channels differentiated so that the switching matrix SM addresses the traffic coming from home network HWN, that coming from public network PWN and that coming from smart counter wireless network SWN to three distinct logic channels. In switching matrix SM the configuration function (the so-called "traffic shaping") occurs in order to associate a bandwidth percentage to each logic and/or physical channel, e.g. X%, Y% and Z%, as shown in figure 6.

Regarding data traffic download from mobile networks to wireless ones, it is possible to use different techniques and algorithms. A classification, known *per se,* defines four categories.

In the first scenario it is driven by the user ("client driven"), whereby the user has to activate the Wi-Fi function on the mobile device and select the Wi-Fi network (WLAN) on the basis of few information provided with the SSID identifier. Authentication generally requires the access information entry such as "username/password". Thus, users need to know two different access references for mobile and Wi-Fi wireless network. Mobile network download strategy ("Wi-Fi data offload ") is transferred to user and is available only on the mobile device (e.g., issuing the order to start connection as soon as Wi-Fi wireless network is available). Since the access procedure is managed by users, they may lose the opportunity to use the Wi-Fi wireless network (WLAN). This condition is experienced by many network operators and it is a concern known in literature as "hotspot is not hot", and it is shown by a low use of Wi-Fi wireless network. At the same time, safety concerns, such as private information interception (the so-called "sniffing") have been highlighted, which have determined *de facto* a low Wi-Fi wireless network development.

The second possibility provides the control by the mobile device ("device assisted"). In this scheme, the mobile device automatically deals with research, selection and authentication phases, whereas users authenticate to Wi-Fi wireless network using their own mobile cellular network access data. Data traffic over Wi-Fi wireless network is protected according to encryption mechanisms known *per se,* such as e.g. WPA2. The download ("offload") strategy is globally configured on the mobile device (e.g., it is imposed to use Wi-Fi wireless network as soon as it is available), in this way, since research process of available networks, use network selection and authentication are made automatically, Wi-Fi wireless connection will be ready as soon as it is available. Thus, the user may access the Wi-Fi wireless network in protected mode whereby the network is available.

An alternative to these first two schemes consists in the possibility to access the Wi-Fi wireless network through a set of access rules ("policy driven"). In this scenario, during a secure and automatic access, the device decides in a clever way when it needs to access the Wi-Fi wireless network, which network must be used and how it should be used (e.g., which services must and may be provided by the Wi-Fi wireless network), basing the choice on established criteria provided by the operator. In this way, a semi-automatic control of the mobile network operator enables cooperation between mobile cellular network and Wi-Fi wireless network. Thus, the operator has the possibility to extend his control over the Wi-Fi wireless network.

A final, different access mode from mobile network to Wi-Fi is led unbeknown to user ("user unaware"). In this scheme, Wi-Fi wireless network may provide user with an experience similar to that of the mobile cellular network. Traffic flows between the mobile cellular network and the Wi-Fi wireless network in a transparent way and without interruptions, according to the network status and under control of the mobile cellular network operator. Wi-Fi wireless network is practically managed as an extension of the mobile cellular network and the mobile network operator will charge service supply independently from the selected network, whether it is the Wi-Fi wireless network or the mobile cellular network.

WAN connecting interfaces (WAI) may be in any number, all implemented in a physical and/or virtual way.

For example, it is possible to have two ADSL interfaces, one serving the public wireless network and one serving the home wireless network, with the traffic separated from each other without interaction possibility (a physical channel with two virtual channels), but also two routers (two physical channels) present simultaneously in the same machine, wherein there are two differentiated logic channels, a public and a home channel (two physical channels each having only one virtual channel), they too, obviously, separated and non-interacting with each other, which serve two networks.

Thus, as described above, it is clear how the invention achieves the task and the objects proposed and particularly it is to be highlighted that a connection and download data traffic device from cellular networks to wireless networks ("WiFi data offload") improving spectrum usage of cellular networks is realized.

In particular, the implementation of a connection system that enables the use of at least one home network unused bandwidth portion, e.g. during night time, for external users which have mobile network access credits, by significantly addressing data traffic towards Wi-Fi network, unburdens the mobile network.

Another advantage of the invention is that spectrum usage of networks alternative to mobile network allows to avoid the Internet traffic block. Furthermore, exploiting the large number of Wi-Fi wireless networks, the possibility to connect automatically is enhanced and data speed download by the user is improved without exorbitant and excessive costs.

Thus, the aim of realizing a connection platform to mobile network is reached; moreover, this platform is extremely broad and allows to convey present and future data traffic essentially without any further expense.

Last but not least, the use of readily commercially available means and the use of common materials make the device economically competitive.

The so-designed invention is susceptible of numerous modifications and variations, all of which fall within the scope of the inventive concept.

It is clear that WAN interfaces (WAI) and/or WAN area network and/or Internet connections may be more than one, implemented in a physical and/or virtual way and in any number, type and wired and/or wireless communication technique combination.

Furthermore, all the details may be replaced by other technically equivalent features.

In practice, the materials employed, as well as the dimensions, may be different according to necessities, provided that they are consistent with the realization purpose.

**Claims**

1. A device for connecting and offloading of data traffic (1, 101, 201) from cellular networks to wireless networks, **characterized in that**:

   - a first wireless interface, WI, connecting at least a home wireless network, HWN, to which home users, HU, and home device may connect;
   - a second wireless interface, WI, connecting at least a public wireless network, PWN, to which external users, EU, and devices external to the environment served by said at least one home wireless network may connect, data traffic of said external users, EU, and of said external devices being offloaded as an alternative to the cellular network;
   - at least one Wide Area Network, WAN, connection interface, WAI, connected to a WAN shared access system;
   - a management interface, MGI, providing management and control functions;
   - a switching matrix, SM, is adapted to separate and allocate traffic coming from at least one of said first wireless interface, said home wireless network, said second wireless interface, said public wireless network, said management interface, by means of said wireless interfaces, into at least two distinct physical channels and/or logic channels differentiated according to data traffic origin, said traffic being also configured in bandwidth portions bidirectionally assigned to said physical channels and/or said logic channels compared to the capacity of the connection interface, WL, to said WAN shared access system,

   wherein traffic coming from at least one between said first wireless interface and said second wireless interface is separated and configured upstream of said WAN connection interface, so as to divide said home user data and said external user data and in order to make available at least a connection bandwidth predetermined portion, WL, via bandwidth allocation means located in said switching matrix;
at least one connection bandwidth predetermined portion comprises a first connection bandwidth predetermined portion, WL, for said home users and a second differentiated band predetermined portion for said second external users, and
said band allocation means manage dynamically said at least one connection bandwidth predetermined portion, WL, to be made available to said home users HU and said external users EU, on the basis of requests coming from said external users EU and on bandwidth use and occupation by said home users HU.

2. The device according to claim 1, **characterized in that** said switching matrix is adapted to_addresses the traffic coming from said home wireless network, said wireless network and from a smart counter wireless network, SWN, to at least three of said distinct physical channels and/or logic channels.

3. The device according to claim 2, **characterized in that** it comprises at least one local area network, LN, connecting in wired mode said home users and said home devices having the interface requested by said local network.

4. The device according to claim 3, **characterized in that** to have a logic structure wherein said home wireless network, said local network, said wireless network and said smart counter wireless network are overlapped the one to each other's.

5. The device according to one or more of previous claims, **characterized in that** said at least one WAN connection interface WAI, is adapted to be connected to said external users via protocols adapted to implement wireless mesh networks, WMN.

6. The device according to claim 5, **characterized in that** it comprises routing protocols so that said external users connect to said at least one WAN connection interface WAI which has greater bandwidth availability compared to others.

7. The device according to one or more of previous claims, **characterized in that** it comprises means of data traffic addressing towards other connection and data traffic download device form cellular networks to wireless networks, in case said shared access devices are unavailable.

8. The device according to one or more of previous claims, **characterized in that** at least one between said first wireless interface (WI) and said second wireless interface is virtually implemented multiple times on the same physical interface in any number and type combination.

9. The device according to one or more of previous claims, **characterized in that** said at least one WAN connection interface is shared between at least two logic channels, each of said at least two logic channels being connected to at least one between said at least one home wireless network, said at least one public wireless network and said at least one local network, via said switching matrix.

10. The device according to one or more of previous claims, **characterized in that** said switching matrix is adapted to_connect and channel data traffic between said at least one home wireless network, said at least one public wireless network and said at least one WAN connection interface, said traffic channelling being governed by bandwidth allocation means.

11. The device according to one or more of previous claims, **characterized in that** said logic channels are implemented with permanent virtual circuits.

12. The device according to one or more of previous claims, **characterized in that** said logic channels are implemented with VLAN.

13. The device according to one or more of previous claims, **characterized in that** said logic channels are implemented with λ-lamda wavelengths associated with individual channels.

14. The device according to one or more of claims 11, 12 and 13, **characterized in that** said at least one connection bandwidth predetermined portion is implemented via traffic classification management functionalities and service quality management.

**Patentansprüche**

1. Vorrichtung zum Verbinden und Entladen von Datenverkehr (1, 101, 201) von zellularen Netzwerken an drahtlose Netzwerke, **gekennzeichnet durch**:

- eine erste drahtlose Schnittstelle, WI, die zumindest ein privates, drahtloses Netzwerk, HWN, verbindet, mit dem sich private Benutzer, HU, und eine private Vorrichtung verbinden können;
- eine zweite drahtlose Schnittstelle, WI, die zumindest ein öffentliches, drahtloses Netzwerk, PWN, verbindet, mit dem sich externe Benutzer, EU, und Vorrichtungen, die außerhalb der über das zumindest eine private, drahtlose Netzwerk bedienten Umgebung sind, verbinden können, wobei der Datenverkehr der externen Benutzer, EU, und der externen Vorrichtungen als eine Alternative zum zellularen Netzwerk entladen wird;
- zumindest eine Verbindungsschnittstelle, WAI, des Weitverkehrsnetzes, WAN, welche mit einem System mit gemeinsamem Zugang zum WAN verbunden ist;
- eine Management-Schnittstelle, MGI, die Management- und Kontrollfunktionen bereitstellt;
- eine Umschaltmatrix, SM, die dazu geeignet ist, den Verkehr, der aus zumindest einem zwischen der drahtlosen Schnittstelle, dem privaten, drahtlosen Netzwerk, der zweiten drahtlosen Schnittstelle, dem öffentlichen, drahtlosen Netzwerk, der Management-Schnittstelle kommt, mittels der drahtlosen Schnittstellen in zumindest zwei separate, physikalische, gemäß dem Datenverkehrsursprung differenzierte Kanäle und/oder Logik-Kanäle zu trennen oder zu ordnen, wobei der Verkehr in Bandbreitenabschnitte ausgebildet ist, die in Bezug auf die Kapazität der Verbindungsschnittstelle, WL, zum System mit gemeinsamem Zugang WAN den physikalischen Kanälen und/oder Logik-Kanälen bidirektional zugeordnet sind,

wobei der aus zumindest einem zwischen der ersten drahtlosen Schnittstelle und der zweiten drahtlosen Schnittstelle kommende Verkehr getrennt und stromaufwärts der WAN-Verbindungsschnittstelle ausgebildet ist, um die privaten Benutzerdaten und die externen Benutzerdaten zu trennen und zumindest einen vorbestimmten Verbindungsbandbreitenabschnitt, WL, durch Bandbreitenzuordnungsmittel bereitzustellen, die in der Umschaltmatrix angeordnet sind;
wobei zumindest ein vorbestimmter Verbindungsbandbreitenabschnitt einen ersten vorbestimmten Verbindungsbandbreitenabschnitt, WL, für die privaten Benutzer und einen zweiten vorbestimmten, differenzierten Bandbreitenabschnitt für die zweiten externen Benutzer umfasst, und
wobei die Bandbreitenzuordnungsmittel den zumindest einen vorbestimmten Verbindungsbandbreitenabschnitt, WL, dynamisch verwaltet, der für die privaten Benutzer HU und die externen Benutzer EU auf der Grundlage der Anfragen von externen Benutzern EU und der Bandbreitennutzung und -besetzung der privaten Benutzer HU zur Verfügung gestellt werden muss.

2. Vorrichtung nach Anspruch 1, **dadurch gekennzeichnet, dass** die Umschaltmatrix dazu geeignet ist, den Verkehr, der aus dem privaten, drahtlosen Netzwerk, dem drahtlosen Netzwerk und einem drahtlosen Netzwerk mit intelligentem Zählsystem, SWN, kommt, an zumindest drei der separaten, physikalischen Kanäle und/oder Logik-Kanäle zu adressieren.

3. Vorrichtung nach Anspruch 2, **dadurch gekennzeichnet, dass** sie zumindest ein lokales Netzwerk, LN, umfasst, das die privaten Benutzer und die privaten Vorrichtungen drahtgebunden verbindet, deren Schnittstelle von einem lokalen Netzwerk angefragt wird.

4. Vorrichtung nach Anspruch 3, **dadurch gekennzeichnet, dass** sie eine logische Struktur aufweist, wobei sich das private, drahtlose Netzwerk, das lokales Netzwerk, das drahtlose Netzwerk und das drahtlose Netzwerk mit intelligentem Zählsystem einander überlappen.

5. Vorrichtung nach einem oder mehreren der vorhergehenden Ansprüche, **dadurch gekennzeichnet, dass** die zumindest eine WAN-Verbindungsschnittstelle, WAI, dazu geeignet ist, mit den externen Benutzern über Protokolle verbunden zu werden, um die drahtlosen, vermaschten Netze, WMN, zu implementieren.

6. Vorrichtung nach Anspruch 5, **dadurch gekennzeichnet, dass** sie Routing-Protokolle umfasst, so dass sich die externen Benutzer mit der zumindest einen WAN-Verbindungsschnittstelle WAI verbinden, die eine größere Bandbreitenverfügbarkeit als andere aufweist.

7. Vorrichtung nach einem oder mehreren der vorhergehenden Ansprüche, **dadurch gekennzeichnet, dass** sie Datenverkehrsmittel umfasst, die an eine andere Vorrichtung zum Verbinden und Entladen von Datenverkehr von zellularen Netzwerken an drahtlose Netzwerke adressieren, falls die Vorrichtungen mit gemeinsamem Zugang nicht verfügbar sind.

8. Vorrichtung nach einem oder mehreren der vorhergehenden Ansprüche, **dadurch gekennzeichnet, dass** zumindest eine zwischen der ersten drahtlosen Schnittstelle (WI) und der zweiten drahtlosen Schnittstelle mehrfach auf derselben physikalischen Schnittstelle in beliebiger Anzahl und Kombinationsart virtuell implementiert wird.

9. Vorrichtung nach einem oder mehreren der vorhergehenden Ansprüche, **dadurch gekennzeichnet, dass** die zumindest eine WAN-Verbindungsschnittstelle zwischen zumindest zwei Logik-Kanäle geteilt wird, wobei jeder der zumindest zwei Logik-Kanäle mit zumindest einem zwischen dem zumindest einen privaten, drahtlosen Netzwerk, dem zumindest einen öffentlichen, drahtlosen Netzwerk und dem zumindest einen lokalen Netzwerk, über die Umschaltmatrix verbunden ist.

10. Vorrichtung nach einem oder mehreren der vorhergehenden Ansprüche, **dadurch gekennzeichnet, dass** die Umschaltmatrix dazu geeignet ist, den Datenverkehr zwischen dem zumindest einen privaten, drahtlosen Netzwerk, dem zumindest einen öffentlichen, drahtlosen Netzwerk und der zumindest einen WAN-Verbindungsschnittstelle zu verbinden und kanalisieren, wobei die Verkehrskanalisierung durch Bandbreitenzuordnungsmittel gelenkt wird.

11. Vorrichtung nach einem oder mehreren der vorhergehenden Ansprüche, **dadurch gekennzeichnet, dass** die Logik-Kanäle mit ständigen, virtuellen Verbindungen implementiert werden.

12. Vorrichtung nach einem oder mehreren der vorhergehenden Ansprüche, **dadurch gekennzeichnet, dass** die Logik-Kanäle mit VLAN implementiert werden.

13. Vorrichtung nach einem oder mehreren der vorhergehenden Ansprüche, **dadurch gekennzeichnet, dass** die Logik-Kanäle mit $\lambda$-Lamda-Wellenlängen implementiert werden, die individuellen Kanälen zugeordnet sind.

14. Vorrichtung nach einem oder mehreren der Ansprüche 11, 12 und 13, **dadurch gekennzeichnet, dass** der zumindest eine vorbestimmten Verbindungsbandbreitenabschnitt durch Management-Funktionalitäten zur Verkehrsklassifizierung und Servicequalitätsmanagement implementiert wird.

**Revendications**

1. Dispositif de connexion et de délestage du trafic de données (1, 101, 201) dans des réseaux cellulaires vers des réseaux sans fil, **caractérisé par** :

 - une première interface sans fil, WI, qui connecte au moins un réseau sans fil à domicile, HWN, auquel se peuvent connecter des utilisateurs à domicile, HU, et un dispositif à domicile ;
 - une seconde interface sans fil, WI, qui connecte au moins un réseau public sans fil, PWN, auquel se peuvent connecter des utilisateurs extérieurs, EU, et des dispositifs qui se trouvent à l'extérieur du milieu desservi par ledit au moins un réseau sans fil à domicile, le trafic de données desdits utilisateurs extérieurs, EU, et desdits dispositifs externes étant déchargé en alternative au réseau cellulaire ;

 - au moins une interface de connexion, WAI, du réseau à grande distance, WAN, connectée à un système à accès partagé au WAN ;
 - une interface de gestion, MGI, fournissant des fonctions de gestion et de contrôle ;
 - une matrice de commutation, SM, qui est adaptée pour séparer et attribuer le trafic provenant d'au moins un entre ladite première interface sans fil, ledit réseau sans fil à domicile, ladite seconde interface sans fil, ledit réseau public sans fil, ladite interface de gestion, à travers lesdites interfaces sans fil, dans au moins deux canaux physiques et/ou canaux logiques séparés, différenciés selon l'origine du trafic de données, ledit trafic étant aussi configuré en parties de bande passante attribuées de façon bidirectionnelle auxdits canaux physiques et/ou auxdits canaux logiques par rapport à la capacité de l'interface de connexion, WL, audit système à accès partagé au WAN,

le trafic provenant d'au moins une entre ladite première interface sans fil et ladite seconde interface sans fil étant séparée et configurée en amont de ladite interface de connexion de WAN, de sorte à séparer lesdits données utilisateurs à domicile et lesdits données utilisateurs extérieurs et pour rendre disponible au moins une partie prédéterminée de la bande passante de connexion, WL, à travers des moyens d'attribution de bande passante disposés dans ladite matrice de commutation ;
au moins une partie prédéterminée de la bande passante de connexion comprenant une première partie prédéterminée de la bande passante de connexion, WL, pour lesdits utilisateurs à domicile et une second partie prédéterminée de bande différentiée pour lesdits second utilisateurs extérieurs, et
lesdits moyens d'attribution de bande gérant de façon dynamique ladite au moins une partie prédéterminée de la bande passante de connexion, WL, à rendre disponible auxdits utilisateurs à domicile HU et auxdits utilisateurs extérieurs EU, sur la base des demandes provenant desdits utilisateurs extérieurs EU et sur la base de l'utilisation et de l'occupation de la bande passante par lesdits utilisateurs à domicile HU.

2. Dispositif selon la revendication 1, **caractérisé en ce que** ladite matrice de commutation est adaptée pour adresser le trafic provenant dudit réseau sans fil à domicile, dudit réseau sans fil et d'un réseau sans fil à compteur intelligente, SWN, à au moins trois desdits distinct canaux physiques et/ou canaux logiques.

3. Dispositif selon la revendication 2, **caractérisé en ce qu'**il comprend au moins un réseau local, LN, qui connecte en mode câblé lesdits utilisateurs à domicile et lesdits dispositifs à domicile ayant l'interface demandée par ledit réseau local.

**4.** Dispositif selon la revendication 3, **caractérisé en ce qu'**il a une structure logique, ledit réseau sans fil à domicile, ledit réseau local, ledit réseau sans fil et ledit réseau sans fil à compteur intelligente étant superposés l'un à l'autre.

**5.** Dispositif selon l'une ou plusieurs des revendications précédentes, **caractérisé en ce que** ladite au moins une interface de connexion de WAN, WAI, est adaptée pour être connectée auxdits utilisateurs extérieurs à travers des protocoles adaptés pour mettre en oeuvre des réseaux maillés sans fil, WMN.

**6.** Dispositif selon la revendication 5, **caractérisé en ce qu'**il comprend des protocoles de routage de manière que lesdits utilisateurs extérieurs se connectent à ladite au moins une interface de connexion de WAN, WAI, qui a une disponibilité de bande passante supérieure par rapport aux autres.

**7.** Dispositif selon l'une ou plusieurs des revendications précédentes, **caractérisé en ce qu'**il comprend des moyens de trafic de données qui s'adressent à un autre dispositif de connexion et de délestage du trafic de données dans des réseaux cellulaires vers des réseaux sans fil, si lesdits dispositifs à accès partagé ne sont pas disponibles.

**8.** Dispositif selon l'une ou plusieurs des revendications précédentes, **caractérisé en ce qu'**au moins une entre ladite première interface sans fil (WI) et ladite seconde interface sans fil est mise en oeuvre virtuellement plusieurs fois sur la même interface physique en n'importe quel nombre et en n'importe quelle combinaison.

**9.** Dispositif selon l'une ou plusieurs des revendications précédentes, **caractérisé en ce que** ladite au moins une interface de connexion de WAN est partagée entre au moins deux canaux logiques, chacun desdits au moins deux canaux logiques étant connecté au moins à un entre ledit au moins un réseau sans fil à domicile, ledit au moins un réseau public sans fil et ledit au moins un réseau local, à travers ladite matrice de commutation.

**10.** Dispositif selon l'une ou plusieurs des revendications précédentes, **caractérisé en ce que** ladite matrice de commutation est adaptée pour connecter et canaliser le trafic de données entre ledit au moins un réseau sans fil à domicile, ledit au moins un réseau public sans fil et ladite au moins une interface de connexion de WAN, ladite canalisation du trafic étant régie par des moyens d'attribution de bande passante.

**11.** Dispositif selon l'une ou plusieurs des revendications précédentes, **caractérisé en ce que** lesdits canaux logiques sont mis en oeuvre avec des circuits permanents virtuels.

**12.** Dispositif selon l'une ou plusieurs des revendications précédentes, **caractérisé en ce que** lesdits canaux logiques sont mis en oeuvre avec VLAN.

**13.** Dispositif selon l'une ou plusieurs des revendications précédentes, **caractérisé en ce que** lesdits canaux logiques sont mis en oeuvre avec des longueurs d'ondes lamda $\lambda$ associées avec des canaux individuels.

**14.** Dispositif selon l'une ou plusieurs des revendications 11, 12 et 13, **caractérisé en ce que** ladite au moins une partie prédéterminée de la bande passante de connexion est mise en oeuvre à travers des fonctionnalités de gestion de la classification du trafic et la gestion de la qualité de service.

FIG. 1

FIG.2

FIG. 3

FIG. 4

Switching matrix SM

MGI
Management Interface

Y% Band

X% Band

Z% Band

WAI
WAN Interface

WAN Connection
WL

Internet and/or wide area networks (WAN)

LN
Local Area Network

Wireless Interface
WI

Wireless Interface

Wireless Module

HWN
Home Wireless Network

Internal Users HU

PWN
Public Wireless Network

External Users EU

SWN
Smart meter Wireless Network

SMT
Smart meters

Access System shared over WAN (SHAW)

201

FIG. 5

17

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001046215 A1
- US 2014362807 A1

**Non-patent literature cited in the description**

- **LIU XINGYU.** An Analytic Hierarchy Process Algoritm for Cloud Based Wi-Fi Offloadin. *IEEE International Conference on Computer Technology,* 2014